# EUROPÄISCHE PATENTSCHRIFT

(11) **EP 0 885 822 B1**
(45) Veröffentlichungstag und Bekanntmachung des Hinweises auf die Patenterteilung: **17.03.2004**
(21) Anmeldenummer: 98250205.6
(22) Anmeldetag: 11.06.1998
(51) Int. Cl.: B65G 47/26, B65G 13/075

(54) **Gefällerollenbahn mit gebremsten Tragrollen und Verfahren zu deren Betrieb**
Gravity conveyor with braked support rollers and method for its operation
Transporteur actionné par gravité à rouleaux supports freinés et son mode de fonctionnement

(30) Priorität: 18.06.1997 DE 19726636; 15.07.1997 DE 19731310
(43) Veröffentlichungstag der Anmeldung: 23.12.1998
(73) Patentinhaber: Siemens Aktiengesellschaft, 80333 München (DE)
(72) Erfinder: Kratz, Helmut, 63110 Rodgau (DE); Hartmann, Hans-Jürgen, 63179 Obertshausen (DE)

(56) Entgegenhaltungen:
- CH-A- 418 973
- DE-A- 2 414 983
- DE-A- 4 235 940
- GB-A- 2 101 550
- US-A- 4 383 598
- US-A- 4 488 638
- US-A- 5 048 660
- US-A- 5 375 689

## Beschreibung

Die Erfindung betrifft eine Gefällerollenbahn mit gebremsten Tragrollen für Fördergut gemäß dem Oberbegriff des Anspruchs 1.

Aus der deutschen Offenlegungsschrift DE 24 14 983 ist bereits eine Gefällerollenbahn bekannt, deren Förderfläche aus einer Kombination von frei dreh- und bremsbaren Tragrollen gebildet ist. Vorzugsweise ist in Förderrichtung gesehen jede fünfte oder sechste Tragrolle abbremsbar. Die gebremsten Tragrollen bestehen im wesentlichen jeweils aus runden Rohrabschnitten, in denen Bremsbeläge angeordnet sind, die zum Abbremsen der Tragrolle über Fliehkraftwirkungen an die Innenseite der Rohres anlegbar sind. Die auf die Bremsbeläge einwirkenden Fliehkräfte werden durch Rotation der die Bremsbeläge betätigenden Bremshebel erzeugt. Die Bremshebel sind hierzu über ein Getriebe mit dem Rohr verbunden, so daß deren Umlaufgeschwindigkeit etwa das neunfache der des Rohres der Tragrolle beträgt. Die Bremseigehschaften der Bremsbeläge sind zusätzlich über gegen die Fliehkraft wirkende Federelemente einstellbar. Die Bremskraft ist somit hauptsächlich von der Drehgeschwindigkeit der Tragrolle abhängig und nimmt mit zunehmender Drehgeschwindigkeit zu.

Nachteilig erweist sich an dieser Gefällerollenbahn, daß ein Aufeinanderfahren der von den bremsbaren Tragrollen verlangsamten Fördergutteile nicht verhindert wird, wenn diese am Ende der Gefällerollenbahn zum Stehen kommen und die anderen Fördergutteile sich stromaufwärts aufstauen. Darüberhinaus besteht für den Fall der manuellen Entnahme der Fördergutteile am Ende der Gefällerollenbahn die Gefahr, daß sich die Bedienperson durch gleichzeitig herangeförderte Fördergutteile verletzen kann. Ferner kann bei leichtem Fördergut eine Weiterförderung des Förderguts durch den Anlaufwiderstand der Bremsrolle verhindert werden.

Aus der US 5,378,689 ist eine gattungsgemäße Gefällerollenbahn gemäß den Merkmalen des Oberbegriffs des Anspruchs 1 bekannt. Der dort beschriebene Förderer weist pneumatisch gebremste und gesteuerte Förderrollen auf, mit denen ein zeitverzögertes Anhalten des Fördergutes auf der Gefällestrecke ermöglicht wird. Die Steuerung ist aufwendig und kompliziert, die Verzögerungszeit ist nicht in Abhängigkeit vom Fördergut und dem Belegungszustand der Tragrollen stromabwärts der gebremsten Tragrollen steuerbar.

Der vorliegenden Erfindung liegt die Aufgabe zugrunde, eine Gefällerollenbahn mit gebremsten Tragrollen zu schaffen, die auch bei einer weiten Variation der Oberflächenbeschaffenheit und der Gewichte des Förderguts dessen Abbremsung und Förderung schonend sowie sicher ermöglicht.

Diese Aufgabe wird bei einer Gefällerollenbahn mit in Förderrichtung gesehen hintereinander angeordneten Tragrollen für das Fördergut durch die im Anspruch 1 aufgeführten Merkmale gelöst. Vorteilhafte Ausgestaltungen der Erfindung. sind in den Unteransprüchen angegeben.

Erfindungsgemäß wird durch die Aufteilung der Gefällerollenbahn in mehrere in Förderrichtung aufeinanderfolgende Abschnitte, die jeweils anhaltbare Tragrollen aufweisen, erreicht, daß das Fördergut schonend entlang der Gefällestrecke transportiert werden kann. Hierzu ist jedem Abschnitt eine Sensoreinheit zugeordnet, die im wesentlichen aus einem Sensorelement und einer zugeordneten Schaltung mit einem Zeitglied besteht. Die Sensoreinheit ist derart aufgebaut, daß bei Beschattung des Sensorelementes durch das Fördergut die Bremselemente die Tragrollen des zugehörigen Abschnittes abbremsen und bei gleichzeitig stromabwärts gesehen folgendem freien weiteren Abschnitt ein Zeitglied in Gang gesetzt wird, so daß automatisch nach Verstreichen der Zeit das Fördergut in Richtung des nächsten Abschnittes freigesetzt wird. Nach Ablauf der Zeit wird die Freigabe des Fördergutes in Richtung des nächsten Abschnittes unterdrückt, wenn dieser Abschnitt belegt ist. Die Sensoreinheit jedes Abschnittes erhält hierzu über eine Freigabe-Leitung ein Signal über den Belegungszustand des stromabwärts gelegenen Abschnittes. Hierdurch wird eine Vergleichmäßigung der Fördergeschwindigkeiten unabhängig von der Oberflächenbeschaffenheit und dem Gewicht des Förderguts erreicht und somit werden zu hohe Endgeschwindigkeiten beim Anhalten des Förderguts am Ende der Gefällerollenbahn sowie bei der Übergabe des Förderguts auf einen Anschlußförderer oder in einen Aufnahmebehälter vermieden. Das Fördergut wird daher besonders schonend behandelt.

Außerdem wird durch die aufstauende Betriebsweise der Gefällerollenbahn erreicht, daß eine manuelle Entnahme der Fördergüter am Ende der Gefällerollenbahn durch eine Bedienperson ohne Verletzungsgefahr erfolgen kann, da ein Aufrücken des Fördergutteils aus dem stromaufwärts gelegenen Abschnitt erst zeitverzögert erfolgt. Somit ist es auch möglich, gefahrlos ein Fördergutteil aus einem mittleren Abschnitt der Rollenbahn zu entnehmen.

Als besonders vorteilhaft hat sich erwiesen, die Sensorelemente als Opto- oder Ultraschallsensoren auszubilden, die bei Anwesenheit eines Fördergutteils ein Signal senden. Außerdem können die Bremselemente mit den zugeordneten Schaltungen und die Sensorelemente nach Art eines Baukastens an eine Gefällerollenbahn angebaut werden und somit auch leicht die Anzahl und Länge der Abschnitte variiert werden. Darüberhinaus können die Sensorelemente mit den Schaltungen unabhängig von übergeordneten Steuerungssystemem arbeiten.

Um die vorgenannten Funktionen zu gewährleisten, ist vorteilhafterweise die Betätigung der Bremselemente der einzelnen Abschnitte über eine elektronische Sensoreinheit vorgesehen, die aus einem Sensorelement und einer zugeordneten Schaltung besteht. Die Schaltung hat die Aufgabe über ein UND-Logik-Baustein, auszuwerten, ob der stromabwärts gelegene und benachbarte Abschnitt der Gefällerollenbahn frei ist und ob das zugehörige Sensorelement ein Fördergutteil auf dem zugeordneten Abschnitt erkennt, um dann die Bremselemente des Abschnittes zum Anhalten des Fördergutteils zu betätigen. Gleichzeitig mit deren Betätigung wird ein Zeitglied in Gang gesetzt mit dem Ziel, die Bremselemente nach einer voreinstellbaren Zeit wieder automatisch zu lösen. Dieser Lösevorgang erfolgt nicht, wenn an der Schaltung kein Freigabe-Signal von dem stromabwärts gelegenen Abschnitt anliegt. Hierdurch wird bei freier Gefällerollenbahn das Fördergut in kleinen Etappen und durch die aufeinanderfolgenden Anhaltevorgänge sehr schonend gefördert.

Die Erfindung wird nachfolgend anhand eines in Zeichnungen dargestellten Ausführungsbeispieles näher beschrieben. Es zeigen:
- Figur 1: eine Seitenansicht einer Gefällerollenbahn mit gebremsten Tragrollen und
- Figur 2: ein Prinzipschaltbild für die Ansteuerung der Bremselemente.

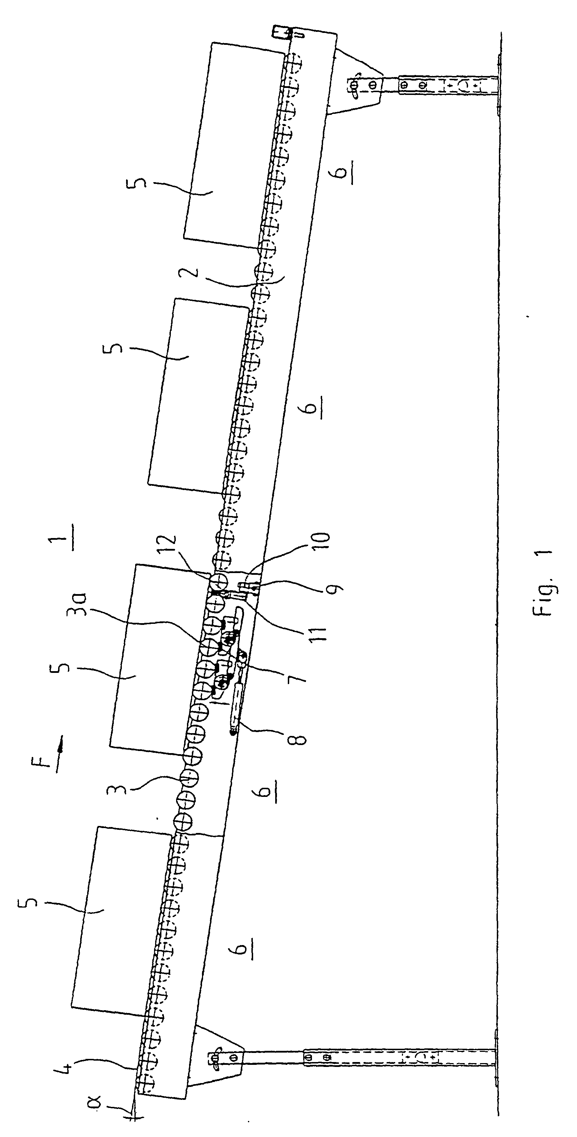

Die Figur 1 zeigt eine Seitenansicht einer Gefällerollenbahn 1, die im wesentlichen aus zwei U-förmigen Längsträgem 2 besteht, zwischen denen sowie an denen frei drehbare Tragrollen 3 und gebremste Tragrollen 3a gelagert sind, deren Drehachsen quer zur Förderrichtung F verlaufen. Die Längsträger 2 und somit die von den Tragrollen 3, 3a gebildete ebene Auflagefläche 4 für das Fördergut 5 ist etwa um einen Winkel α von bis zu etwa 20° aus der Horizontalen nach unten geneigt. Am unteren Ende der Gefällerollenbahn 1 wird das Fördergut 5 manuell entnommen. Es ist auch möglich, das Fördergut 5 auf einen Abzweigförderer oder in einen Aufnahmebehälter zu übergeben.

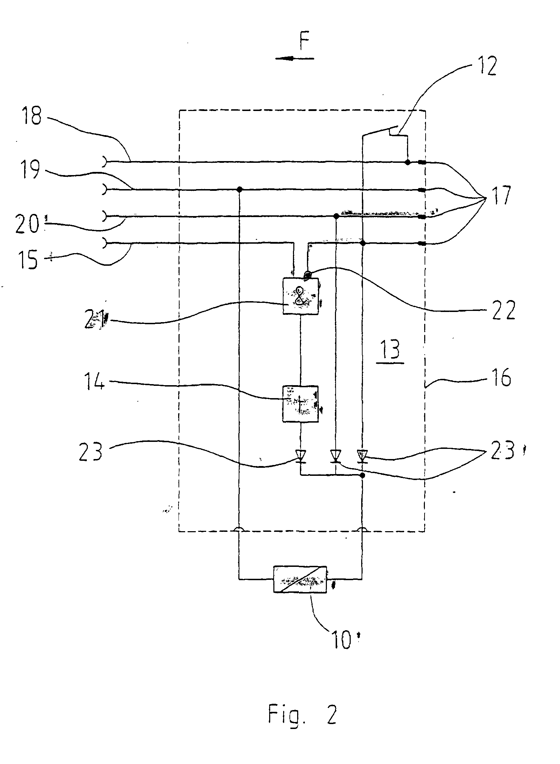

Die Gefällerollenbahn 1 ist in mehrere in Förderrichtung F aufeinanderfolgende Abschnitte 6 aufgeteilt, deren Tragrollen 3a jeweils über Bremselemente 7 anhaltbar sind. Im Bereich des dritten Abschnittes 6 gegen die Förderrichtung F -und vom unteren Ende der Gefällerollenbahn 1 aus gesehen- ist der Längsträger 2 aufgebrochen dargestellt, um die zwischen den Längsträgem 2 und unter den Tragrollen 3 angeordneten Bremselemente 7 und weitere Bauteile darzustellen zu können. Die Bremselemente 7 sind über einen Pneumatikzylinder 8 an die Tragrollen 3a anstellbar. Der Pneumatikzylinder 8 ist über ein Ventil 9 mit einem Elektromagneten 10 zu dessen Betätigung an eine Druckmittelversorgung angeschlossen. Der Elektromagnet 10 wird über eine Sensoreinheit 11 angesteuert, die dem Abschnitt 6 zugeordnet ist. Jede Sensoreinheit 11 besteht im wesentlichen aus einem Sensorelement 12, das als Opto- oder Ultraschallsensor, vorzugsweise als Lichttaster ausgebildet ist, und einer hiermit verbundenen und im Gehäuse des Sensorelements 12 angeordneten Schaltung 13. Die Schaltung 13 weist als wesentliches Bauteil ein Zeitglied 14 (siehe Fig. 2) auf und hat die Aufgabe, in den jeweiligen Abschnitt 6 der Gefällerollenbahn 1 eingefahrene Fördergutteile 5 über Betätigung der Bremselemente 7 anzuhalten, sowie diese nach Verstreichen einer in dem Zeitglied 14 voreinstellbaren Zeit durch Lösen der Bremselemente 7 automatisch wieder freizugeben. Ein derartiges Freigeben des Fördergutes 5 erfolgt jedoch nur, wenn die Schaltung 13 von dem stromabwärts gelegenen Abschnitt 6 ein sogenanntes Freigabe-Signal, d. h. der stromabwärts gelegene Abschnitt 6 ist frei, erhalten hat.

Nachfolgend wird die erfindungsgemäße Gefällerollenbahn 1 anhand eines Füll- und nachfolgenden Entleervorgangs näher beschrieben. Fährt ein Fördergutteil 5 in den stromaufwärts gelegenen ersten Abschnitt 6 der Gefällerollenbahn 1 ein, so wird das im Bereich des stromabwärts gelegenen Endes dieses Abschnittes 6 angeordnete Sensorelement 12 beschattet. Dies hat zur Folge, daß der Elektromagnet 10 für die Betätigung des Ventiles 9 stromlos geschaltet wird, somit das Ventil 9 die Druckmittelzufuhr zu dem Pneumatikzylinder 8 unterbunden und dieser gelüftet wird, so daß die Bremselemente 7 über eine federnde Vorspannung sich an die Tragrollen 3a anlegen. Das Fördergutteil 5 wird somit in dem ersten Abschnitt 6 angehalten. Durch diese Betätigungsart ist vorteilhafterweise im Falle eines Ausfalls der Stromoder Druckluftversorgung der Abschnitt 6 im gebremsten Zustand. Gleichzeitig mit der Beschattung des Sensorelementes 12 wird für den Fall, daß ein Freigabe-Signal von dem stromabwärts benachbarten Abschnitt 6 übermittelt wird, das Zeitglied 14 mit einer voreinstellbaren Zeit von z. B. etwa 2 Sekunden in Gang gesetzt. Nach Verstreichen der Zeit wird der Elektromagnet 10 des Ventils 9 wieder mit Spannung versorgt, so daß die Bremselemente 7 von den Tragrollen 3a wieder gelöst werden und das Fördergutteil 5 in den stromabwärts gelegenen und benachbarten Abschnitt 6 einfahren kann. In diesem Abschnitt 6 wiederholt sich nun der zuvor beschriebene Vorgang und das Fördergutteil 5 durchläuft somit nach einer Anhaltezeit von z. B. jeweils 2 Sekunden den zweiten und dritten Abschnitt 6.

In dem stromabwärts gelegenen letzten Abschnitt 6 ist ebenfalls eine Sensoreinheit 11 vorgesehen, dessen Sensorelement 12 im vorliegenden Ausführungsfall nicht über eine Freigabe-Leitung mit einem stromabwärts gelegenen Abschnitt verbunden ist, da von diesem Abschnitt 6 die Fördergutteile 5 manuell entnommen werden. Für den Fall, daß die Fördergutteile 5 an einen Abzweigförderer übergeben werden sollen, kann von dort ein Freigabe-Signal an diese Sensoreinheit 11 übermittelt werden. Da jedoch im vorliegenden Fall kein Freigabe-Signal anliegt, werden die Bremselemente 7 nur von den Tragrollen 3a gelöst, wenn das Fördergutteil 5 von diesem Abschnitt 6 abgehoben wird, so daß das Sensorelement 12 wieder ein Signal an die Schaltung 13 für die Versorgung des Elektromagneten 10 mit Spannung senden kann.

Fährt nun bei belegtem unteren Abschnitt 6 ein weiteres Fördergutteil 5 in die Gefällerollenbahn 1 ein, so durchfährt dieses wie zuvor beschrieben die stromaufwärts gelegenen Abschnitte 6 bis dieses in den in Förderrichtung F gesehen vorletzten Abschnitt 6 gelangt. Da dort an der Sensoreinheit 11 kein Freigabe-Signal von dem in Förderrichtung gesehen letzten Abschnitt 6 anliegt, wird das Zeitglied 14 nicht aktiviert, so daß die Beschattung des Sensorelementes 12 nur ein Einfallen der Bremselemente 7 bewirkt und nicht deren Lösung über das Zeitglied 14. In dieser Weise können nun alle Abschnitte 6 der Gefällerollenbahn 1 gefüllt werden.

In dem Moment, in dem das Fördergutteil 5 auf dem in Förderrichtung F gesehen letzten Abschnitt 6 entnommen wird, werden über das Signal des Sensorelementes 12 die Bremselemente 7 gelöst und an den stromaufwärts benachbarten Abschnitt 6 ein Freigabe-Signal übermittelt. Dies hat zur Folge, daß dort ebenfalls die Bremselemente 7 nach Ablauf der Zeit gelöst werden und somit das Fördergutteil 5 einen Abschnitt 6 aufrücken kann. Hierdurch ist gewährleistet, daß die Fördergutteile 5 staudrucklos entlang der Gefällerollenbahn 1 gefördert werden können und gleichzeitig eine zu hohe Endgeschwindigkeit am Ende der Gefällerollenbahn 1 vermieden wird. Im Anschluß hieran rücken die übrigen Fördergutteile 5 alle aufeinanderfolgend einen Abschnitt 6 auf. Diese Betriebsweise erfolgt auch, wenn durch eine Bedienperson ein Fördergutteil 5 aus einem beliebigen Abschnitt 6 entnommen wird.

Desweiteren ist vorgesehen, das Fördergut 5 nicht einzeln hintereinander sondern gleichzeitig und in einem Pulk jeweils in den nächsten Abschnitt 6 aufrücken zu lassen. Diese Verfahrensweise wird auch Blockabzug genannt. Hierzu sind die einzelnen Sensoreinheiten 11 über eine Blockabzug-Leitung 20 (siehe Fig. 2) verbunden, über die ein Signal auf die Sensoreinheiten 11 aufgegeben werden kann, das die Signale der Schaltungen 13 und der Sensorelemente 12 überbrückt und die Magnete 10 der Ventile 9 mit Spannung versorgt, so daß die Bremselemente 7 gelöst werden und das Fördergut 5 jeweils selbsttätig solange weiterollt, wie auf der Blockabzug-Leitung 20 ein Pluspotential anliegt (Impulsbetrieb). Wird der Blockabzug wieder abgeschaltet, wird die Gefällerollenbahn 1 wieder in den Normalzustand zurückgeschaltet. Das Fördergut 5 wird automatisch am nächsten Abschnitt 6 wieder angehalten.

Durch diese Steuerung der Gefällerollenbahn 1 wird eine Vergleichmäßigung der Fördergeschwindigkeiten der Fördergüter 5 unter Berücksichtigung der im wesentlichen durch ihr Gewicht und ihre Oberflächenbeschaffenheit bestimmten Fördergeschwindigkeit erzielt.

Es ist auch möglich über den Blockabzug-Betrieb für alle oder einen Teil der Abschnitte 6 eine Optimierung des Füllgrades zu erreichen, wenn gleichzeitig die Gefällerollenbahn 1 nicht entleert wird. Hierbei fahren weitere Fördergutteile 5 in einem Abschnitt 6 und stauen sich ohne Lücke an dem stromabwärts angehaltenen Fördergutteil 6 auf.

Nachfolgend wird anhand der Figur 2, die ein Prinzipschaltbild zeigt, die Funktion der Sensoreinheit 11 näher erläutert. Die Sensoreinheit 11 besteht im wesentlichen aus dem Sensorelement 12 mit der zugeordneten Schaltung 13, die in einem gemeinsamen Gehäuse 16 angeordnet und über Steckkontakte 17 mit Sensoreinheiten 11 von angrenzenden Abschnitten 6 verbindbar ist. Es sind ein- und ausgangsseitig jeweils vier Steckkontakte 17 vorgesehen, die mit der Freigabe-Leitung 15, den Versorgungs-Leitungen 18 und 19 sowie der Blockabzug-Leitung 20 verbunden sind. Die Versorgungs-Leitungen 18,19, die durch die Schaltung 13 durchgeschleift ist, führen die Plusspannung und die Minusspannung. Das als Schaltsymbol angedeutete Sensorelement 12 ist eingangsseitig mit der Plus-Leitung 18 und ausgangsseitig mit einem UND-Logik-Baustein 21 verbunden. Die Verbindung mit dem UND-Logik-Baustein 21 erfolgt über ein Negierungselement 22. Für den Fall, daß von der Vorderkante des Fördergutes 5 das als Lichttaster ausgebildete erste Sensorelement 12 beschattet wird, wird das an dem einen Eingang des UND-Logik-Bausteins 21 anstehende Signal unterbrochen. Somit liegt hier eine 0 an. Außerdem wird die Stromzufuhr von der plusführenden Versorgungsleitung 18 über das Sensorelement 12 über eine Sperrdiode in Richtung des Elektromagnets 10 unterbrochen. Dies hat zur Folge, daß über das Ventil 9 der Pneumatikzylinder 8 gelüftet wird und die den Fedem vorgespannten Bremselemente 7 die Tragrollen 3a abbremsen. Gleichzeitig wird über die Freigabe-Leitung 15 kein Freigabe-Signal mehr in Richtung der Schaltung 13 des stromaufwärts gelegenen Abschnittes 6 der Gefällerollenbahn 1 mehr übermittelt. An dem weiteren Eingang des UND-Logik-Bausteins 21 steht über die Freigabe-Leitung 15 nur ein Signal an, wenn der Abschnitt 6 stromabwärts nicht von Fördergut 5 belegt ist.

Für den Fall, daß dieser Abschnitt 6 nicht belegt ist, steht an dem weiteren Eingang des UND-Logik-Bausteins 21 das Signal 1 an. Somit wird ausgangsseitig ein Signal an das Zeitglied 14 weitergeleitet, das beispielsweise auf eine Zeit von 2 Sekunden eingestellt ist und nach Ablauf dieser Zeit über eine weitere Sperrdiode 23 den Elektromagneten 10 mit Spannung versorgt. Hierdurch werden die Bremselemente 7 gelüftet und das Fördergut 5 läuft selbsttätig an und rollt in den freien stromabwärts gelegenen nächsten Abschnitt 6, um dort in Abhängigkeit des Belegungszustandes des stromabwärts folgenden Abschnitts 6 nur kurzzeitig oder für längere Zeit angehalten werden.

Sollte von der stromabwärts gelegenen Sensoreinheit 11 über die Freigabe-Leitung 15 kein Freigabe-Signal an dem UND-Logik-Baustein 21 anstehen, liegen an dem Eingang unterschiedliche Signale vor, so daß das Zeitglied 14 solange kein Signal erhält, bis ein Freigabe-Signal eingeht.

Zusätzlich ist vorgesehen über eine weitere durch die Sensoreinheiten 11 durchgeschleifte Blockabzug-Leitung 20 die Möglichkeit zu geben, das Fördergut 5 bei Leerung des untersten Abschnittes 6 nicht nur aufeinanderfolgend in den nächsten leeren Abschnitt 6 aufrücken zu lassen, sondern diesen Aufrückvorgang zeitsparenderweise in einem Pulk vorzusehen. Hierzu ist eine Blockabzug-Leitung 20 durch die einzelnen Sensoreinheiten 11 durchgeschleift und über eine Sperrdiode 23 mit dem Elektromagneten 10 verbunden. Wird auf die Blockabzugs-Leitung 20 ein Signal aufgegeben, so werden das Sensorelement 12 und der UND-Logik-Baustein 21 überbrückt und der Elektromagnet 10 direkt mit Spannung versorgt. Dies hat zur Folge, daß alle Fördergüter 5 gleichzeitig weiter in Förderrichtung F aufrücken.

Die Erfindung ist zwar im Ausführungsbeispiel anhand von über Pneumatikzylindem 8 betätigten Bremselementen 7 erläutert, es sind jedoch auch andere Antriebe wie z. B. elektromotorische einsetzbar.

### Bezugszeichenliste

- 1: Gefällerollenbahn
- 2: Längsträger
- 3: Tragrollen
- 3a: gebremste Tragrollen
- 4: Auflagefläche
- 5: Fördergut
- 6: Abschnitt
- 7: Bremselement
- 8: Pneumatikzylinder
- 9: Ventil
- 10: Elektromagnet
- 11: Sensoreinheit
- 12: Sensorelement
- 13: Schaltung
- 14: Zeitglied
- 15: Freigabe-Leitung
- 16: Gehäuse
- 17: Steckkontakt
- 18: Versorgungs-Leitung
- 19: Versorgungs-Leitung
- 20: Blockabzug-Leitung
- 21: UND-Logik-Baustein
- 22: Negierungselement
- 23: Sperrdiode
- a: Abstand
- F: Förderrichtung
- α: Winkel

## Patentansprüche

1. Gefällerollenbahn mit in Förderrichtung (F) gesehen frei drehbar gelagerten hintereinander angeordneten Tragrollen (3, 3a) für das Fördergut (5), mit mindestens einzelnen Tragrollen (3a) zugeordneten Bremselementen (11), die zur Abbremsung des Fördergutes (5) an die Tragrollen (3a) anlegbar sind, wobei die Gefällerollenbahn (1) mehrere in Förderrichtung (F) aufeinander folgende Abschnitte (6) aufweist, jedem Abschnitt eine Sensoreinheit (11) zugeordnet ist, die im wesentlichen aus einem Sensorelement (12) und einer zugeordneten Schaltung (13) für die Betätigung der Bremselemente (7) besteht und das Fördergut (5) in jedem Abschnitt (6) nach Erkennung durch das Sensorelement (12) durch pneumatische Betätigung der Bremselemente (7) über die Schaltung (13) anhaltbar und die Bremselemente (7) nach Ablauf einer Zeit lösbar sind,
**dadurch gekennzeichnet,**
**daß** der für die Betätigung der Bremselemente (7) vorgesehene Pneumatikzylinder (8) über ein Ventil (9) mit einem Elektromagneten (10) betätigbar ist, der ausgangsseitig mit der Schaltung (13) des zugehörigen Abschnitts (6) verbunden ist, die im wesentlichen aus einem UND-Logikbaustein (20) und einem Zeitglied (14) besteht, der UND-Logik-Baustein (20) an einem Eingang über ein Negierungselement (22) mit dem Sensorelement (12), und über eine Freigabe-Leitung (15) für die Übermittlung des Belegungszustandes des jeweiligen stromabwärts benachbarten Abschnittes (6) der Gefällerollenbahn (1) mit der Schaltung (13) des stromaufwärts benachbarten Abschnitts (6) verbunden und an dem anderen Eingang mit dem Sensorelement (12) und einem Eingang des UND-Logik-Bausteins (21) der Schaltung (13) des stromabwärts benachbarten Abschnitts (6) verbunden ist, der UND-Logik-Baustein (22) ausgangsseitig über das Zeitglied (14) mit dem Elektromagnet (22) des Ventils (9) für die Ansteuerung der Bremselemente (7) verbunden ist und das Sensorelement (12) über eine Sperrdiode (23) mit dem Elektromagneten (10) verbunden ist und bei anstehendem Freigabe-Signal nach Ablauf der voreinstellbaren Zeit die Bremselemente (7) lösbar sind.

2. Gefällerollenbahn nach Anspruch 1,
**dadurch gekennzeichnet, daß** die benachbarten Sensoreinheiten (11) über eine Blockabzug-Leitung (20) zum pulkweisen Weitertransport der Fördergüter (5) von allen Abschnitten (6) nach Leerung des Abschnittes (6) am unteren Ende der Gefällerollenbahn (1) verbunden sind und die Blockabzug-Leitung (20) über eine Sperrdiode (23) mit dem Elektromagneten (10) jedes Abschnittes verbunden ist.

3. Gefällerollenbahn nach Anspruch 1 und 2,
**dadurch gekennzeichnet daß** die Sensorelemente (7,8) als Opto- oder Ultraschallsensoren ausgebildet sind.

## Claims

1. Gravity roller conveyor with support rollers (3, 3a) for the material being conveyed (5), which are mounted freely rotatably and arranged one behind the other, seen in the conveying direction (F), with braking elements (11) which are assigned at least to individual support rollers (3a) and can be applied to the support rollers (3a) for braking the material being conveyed (5), the gravity roller conveyor (1) having a number of sections (6) following one another in the conveying direction (F), each section being assigned a sensor unit (11) which substantially comprises a sensor element (12) and an assigned circuit (13) for the actuation of the braking elements (7), and the material being conveyed (5) being able to be stopped in each section (6), after detection by the sensor element (12), by pneumatic actuation of the braking elements (7) via the circuit (13), and the braking elements (7) being able to be released after expiry of a time, **characterized in that** the pneumatic cylinder (8) provided for the actuation of the braking elements (7) can be actuated by means of a valve (9) with an electromagnet (10), which is connected on the output side to the circuit (13) of the associated section (6), which circuit substantially comprises an AND logic module (20) and a timing element (14), the AND logic module (20) is connected at one input via a negating element (22) to the sensor element (12), and via a release line (15) for the transmission of the state of occupancy of the respective section (6) that is neighbouring downstream of the gravity roller conveyor (1) to the circuit (13) of the section (6) that is neighbouring upstream and is connected at the other input to the sensor element (12) and an input of the AND logic module (21) of the circuit (13) of the section (6) that is neighbouring downstream, the AND logic module (22) is connected on the output side via the timing element (14) to the electromagnet (22) of the valve (9) for the activation of the braking element (7), and the sensor element (12) is connected via a blocking diode (23) to the electromagnet (10), and the braking element (7) can be released when a release signal is present after expiry of the time which can be preset.

2. Gravity roller conveyor according to Claim 1, **characterized in that** the neighbouring sensor units (11) are connected via a block-discharge line (20) for the block-by-block further transport of the materials being conveyed (5) from all the sections (6) after emptying of the section (6) at the lower end of the gravity roller conveyor (1), and the block-discharge line (20) is connected via a blocking diode (23) to the electromagnet (10) of each section.

3. Gravity roller conveyor according to Claims 1 and 2, **characterized in that** the sensor elements (7, 8) are formed as optical or ultrasonic sensors.

## Revendications

1. Transporteur à rouleaux par gravité comportant des rouleaux porteurs (3, 3a) placés les uns derrière les autres par référence au sens de transport (F), montés de façon à pouvoir tourner librement et destinés à des marchandises à transporter (5), des éléments de freinage (11), qui sont associés à au moins des rouleaux porteurs individuels (3a) et qui peuvent être appliqués sur les rouleaux porteurs (3a) en vue de freiner les marchandises à transporter; le transporteur à rouleaux par gravité (1) comportant plusieurs sections (6) qui se suivent par référence au sens de transport (F), chaque section étant associée à une unité de capteur (11) qui se compose essentiellement d'un élément de capteur (12) et d'un circuit associé (13) destiné à actionner les éléments de freinage (7), les marchandises à transporter (5) pouvant être arrêtés dans chaque section, après détection au moyen de l'élément de capteur (7), en actionnant par des moyens pneumatiques et par l'intermédiaire du circuit (13) les éléments de freinage (7), et les éléments de freinage (7) pouvant être desserrés à l'expiration d'un temps,
**caractérisé en ce que** le vérin pneumatique (8) prévu pour actionner les éléments de freinage (7) peut être commandé par un clapet (9) comportant un électroaimant (10), dont la sortie est reliée au circuit (13) de la section associée (6), circuit qui est constitué essentiellement d'un composant logique ET (20) et d'un temporisateur (14), le composant logique ET (20) est relié par une entrée à l'élément de capteur (12) par un élément inverseur (22) et au circuit (13) de la section voisine (6) en amont par une ligne de libération (15) destiné à la transmission de l'état d'occupation de la section voisine en aval respective (6) du transporteur à rouleaux par gravité (1), et est relié par l'autre entrée à l'élément de capteur (12) et à une entrée du composant logique ET (21) du circuit (13) de la section voisine (6), en aval, le composant logique ET (22) est relié en sortie à l'électroaimant (22) du clapet (9) par le temporisateur (14) en vue de commander les éléments de freinage (7), l'élément de capteur (12) est relié à l'électroaimant (10) par une diode d'isolement (23) et les éléments de freinage (7) peuvent être desserrées à l'expiration du temps réglable à l'avance lorsqu'un signal de libération est en attente.

2. Transporteur à rouleaux par gravité selon la revendication 1, **caractérisé en ce que** les unités de capteur voisines (11) sont reliées par une ligne de décharge par blocs (20) pour faire avancer par groupes les marchandises à transporter (5) venant de toutes les sections (6) après avoir vidé la section (6) se trouvant à l'extrémité inférieure du transporteur à rouleaux par gravité (1) et **en ce que** la ligne de décharge par blocs (20) est reliée à l'électroaimant (10) de chaque section par une diode d'isolement.

3. Transporteur à rouleaux par gravité selon la revendication 1 ou 2, **caractérisé en ce que** les éléments de capteur (7, 8) sont conformés en capteurs optiques ou à ultrasons.
